# EUROPEAN PATENT SPECIFICATION

(11) **EP 1 829 771 B1**
(45) Date of publication and mention of the grant of the patent: **02.12.2009**
(21) Application number: 07103356.7
(22) Date of filing: 01.03.2007
(51) Int. Cl.: B62D 25/14, B62D 27/02, B62D 29/00

(54) **Reticulated cross-member for a motor vehicle**
Netzartiger Querträger für ein Motorfahrzeug
Elément croisé réticulé pour véhicule à moteur

(30) Priority: 02.03.2006 IT TO20060154
(43) Date of publication of application: 05.09.2007
(73) Proprietor: ELASIS - Società Consortile per Azioni, 80038 Pomigliano d'Arco (IT)
(72) Inventor: De Angelis Coccanari, Marco, 80038 Pomigliano d'Arco (IT)
(74) Representative: Jorio, Paolo

(56) References cited:
- DE-A1- 19 933 531
- US-A- 1 645 060
- US-A- 4 069 638
- US-A1- 2004 070 190
- US-B2- 6 668 513

## Description

The present invention relates to a reticulated cross-member, in particular for use in the automobile industry as a cross-member beneath the dashboard.

In general, reticulated cross-members are used in the construction industry because they have the advantage of being very thin, i.e. they have a high ratio of strength to weight. This effect is obtained by means of concentration of the weight at the end of the cross-section, and lightening of the portions which are less subjected to stress. Reticulated cross-members also have the advantage that they are modular, and are therefore unambiguously defined by determining few characteristic geometric parameters. This last aspect makes particularly easy the scaling of the structure itself and its optimisation according to the conditions of use.

A reticulated cross-member generally comprises longitudinal support elements and transverse support elements which are connected transversely between two adjacent longitudinal support elements.

An example of the prior art is shown in US 2004070190.

In most applications, these support elements are produced using profiled elements which can easily be obtained on the market. The production of a reticulated structure therefore does not require original semifinished products which have high costs. The most costly aspect of the production is caused by the large number of joints to be produced, in general by means of welding, riveting, nailing or the like.

The object of the present invention is to produce a reticulated cross-member which is free from the above-described disadvantage.

The object of the present invention is achieved by means of a reticulated cross-member as specified in claim 1.

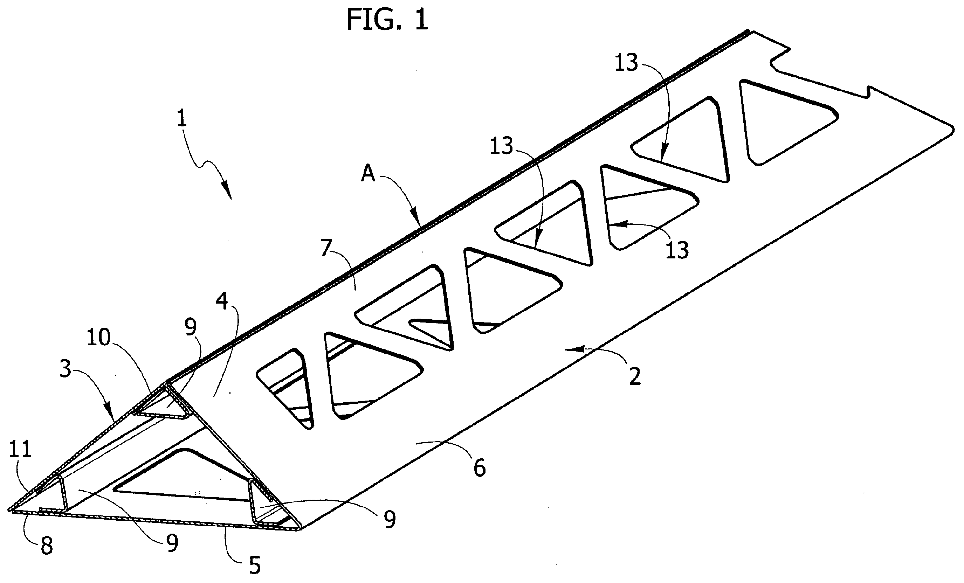

For better understanding of the present invention, a preferred embodiment of it is now described, purely by way of non-limiting example, with reference to the attached drawing, in which figure 1 is a perspective view of a reticulated cross-member according to the present invention.

In figure 1, 1 represents a reticulated cross-member, wherein it is proposed to reproduce the behaviour of lattices and reticulated structures in general.

The beam 1 has a closed triangular transverse cross-section, and comprises a metal element 2 and a wall 3, both of which are made from a sheet of metal by means of laser cutting or blanking.

In particular, the element 2 is produced by bending, and defines a form substantially in the shape of a "V", wherein two walls 4, 5 converge towards a connection portion 6 which defines an acute angle. The element 2 also has two free longitudinal edges 7, 8.

The beam 1 also comprises a plurality of longitudinal elements 9 which are disposed in the concave aperture formed by two adjacent walls, in order to join the metal element 2 to the wall 3 by means of a construction adhesive, along a line A which is parallel to the free longitudinal edges 7, 8. The longitudinal elements 9 can have an open or closed cross-section, and connect respective longitudinal edges 10, 11 of the wall 3 to the free longitudinal edges 7, 8 of the metal element 3. Preferably, a longitudinal element 9 is also connected between the two walls 4 and 5 to the connection portion 6 on a concave surface 12 of the latter. The longitudinal elements 9 can be obtained from flat plates which are bent, or they can be extruded with an open or closed cross-section.

As illustrated in the drawings, each longitudinal element 9 forms respectively a closed cross-section with the connection portion 6, and with the edges 7, 10 and 8 it forms reinforcement portions with a concave transverse cross-section in the shape of a "C" which can increase the flexural strength of the beam 1.

The configuration previously described also has the advantage of providing a thin structure, i.e. which has a good ratio of strength to weight. Observation of a transverse cross-section of the structure shows that in each wall 3, 4, 5, most of the weight is disposed in the vicinity of the edges 7, 8, 10 and 11 and of the connection portion 6, whereas the intermediate areas are not reinforced by the longitudinal elements 7. Preferably, each of the walls 3, 4 and 5 also defines lightening apertures 13, which have a triangular shape and are aligned longitudinally between the edges 7, 8 and the connection portion 6 and between the edges 10 and 11.

A structure of this type is designed to work mainly under flexure, i.e. it is supported or embedded at both ends, and must withstand the weight of elements which are suspended along the span.

The application of the beam 1 is in the automobile industry as a cross-member beneath the dashboard, for the purpose of supporting the dashboard itself (not shown in the figure), the steering column, and the pedals.

The construction adhesive, which for example is a two-component adhesive, and preferably the adhesive sold under the name X60 made by HBM, simplifies considerably the problem of the joints, by guaranteeing continuity of coupling between the various elements. Compared with similar structures which are welded in sections or are spot-welded, an improvement in both the static and dynamic strength is obtained, and in addition the problem does not exist of having to resort to particular techniques (of the TIG welding type) when elements made of aluminium alloy or other light alloys are used.

Finally, it is apparent that modifications and variations may be applied to the reticulated cross-member described and illustrated here, without departing from the protective scope of the present invention, as defined in the attached claims.

For example, the transverse cross-section of the beam 1 may have a different geometry, for example it may be square or polygonal.

## Claims

1. Reticulated beam (1) for a motor vehicle, comprising a first and a second converging lateral wall (4, 5) and made of a single element (2), and of at least a third wall (3) which is connected to at least one of the said first and second walls (4, 5) along a line (A) which is substantially longitudinal, **characterised by** being connected by means of an adhesive, in order to a define a closed transverse cross-section, and at least one of the said first, second and third walls (4; 5; 3) defining continuous longitudinal edges (6, 7, 8; 10, 11) and a plurality of apertures (13) which are adjacent longitudinally and are disposed between the said longitudinal edges (6, 7, 8; 10, 11).

2. Reticulated beam according to claim 1, **characterised in that** the said first and second walls (4, 5) are produced by means of a sheet of metal which is bent along a longitudinal connection portion (6).

3. Reticulated beam according to claim 2, **characterised in that** it comprises at least one longitudinal element (9) which is connected longitudinally to two of the said first, second, and at least a third walls (4, 5, 3) in order to define a longitudinal structural reinforcement portion.

4. Beam according to claim 3, **characterised in that** the said longitudinal element (9) has a closed transverse cross-section.

## Patentansprüche

1. Netzartiger Träger (1) für ein Kraftfahrzeug, der eine erste und eine zweite Seitenwand (4, 5), die aufeinander zulaufen und aus einem einzelnen Element (2) bestehen, sowie wenigstens eine dritte Wand (3) umfasst, die mit wenigstens der ersten oder der zweiten Wand (4, 5) entlang einer Linie (A) verbunden ist, die im Wesentlichen in Längsrichtung verläuft, **dadurch gekennzeichnet, dass** sie mittels eines Klebstoffs verbunden sind, so dass sie einen geschlossenen Querschnitt bilden, und wenigstens die erste, die zweite oder die dritte Wand (4; 5; 3) durchgehende Längskanten (6, 7, 8; 10, 11) sowie eine Vielzahl von Öffnungen (13) aufweist, die in Längsrichtung benachbart sind und zwischen den Längskanten (6, 7, 8; 10, 11) angeordnet sind.

2. Netzartiger Träger nach Anspruch 1, **dadurch gekennzeichnet, dass** die erste und die zweite Wand (4, 5) aus einem Blech hergestellt werden, das entlang eines Längsverbindungsabschnitts (6) gebogen wird.

3. Netzartiger Träger nach Anspruch 2, **dadurch gekennzeichnet, dass** er wenigstens ein Längselement (9) umfasst, das in Längsrichtung mit zwei Wänden von der ersten, der zweiten und wenigstens einer dritten Wand (4, 5, 3) verbunden ist, um einen strukturellen Längs-Verstärkungsabschnitt zu bilden.

4. Träger nach Anspruch 3, **dadurch gekennzeichnet, dass** das Längselement (9) einen geschlossenen Querschnitt hat.

## Revendications

1. Poutre réticulée (1) destinée à un véhicule à moteur, comprenant des première et deuxième parois latérales convergentes (4, 5) et réalisée d'un seul élément (2), et au moins une troisième paroi (3) qui est reliée à l'une au moins desdites première et deuxième parois (4, 5) le long d'une ligne (A) qui est sensiblement longitudinale, **caractérisée par le fait qu'**elle est reliée au moyen d'un adhésif, de manière à définir une section transversale fermée, et l'une au moins desdites première, deuxième et troisième parois (4 ; 5 ; 3) définissant des bords longitudinaux continus (6, 7, 8 ; 10, 11) et une pluralité d'ouvertures (13) qui sont adjacentes de manière longitudinale et sont disposées entre lesdits bords longitudinaux (6, 7, 8 ; 10, 11).

2. Poutre réticulée selon la revendication 1, **caractérisée en ce que** lesdites première et deuxième parois (4, 5) sont produites au moyen d'une feuille de métal qui est pliée le long d'une partie de liaison longitudinale (6).

3. Poutre réticulée selon la réclamation 2, **caractérisée en ce qu'**elle comprend au moins un élément longitudinal (9) qui est relié de manière longitudinale à deux desdites première, deuxième, et au moins à une troisième, parois (4, 5, 3) de manière à définir une partie de renfort structural longitudinal.

4. Poutre selon la revendication 3, **caractérisée en ce que** ledit élément longitudinal (9) présente une section transversale fermée.
